(19) **Europäisches Patentamt European Patent Office Office européen des brevets**

(11) **EP 4 465 733 A1**

(12) **EUROPEAN PATENT APPLICATION**
published in accordance with Art. 153(4) EPC

(43) Date of publication:
**20.11.2024 Bulletin 2024/47**

(21) Application number: **23737477.2**

(22) Date of filing: **10.01.2023**

(51) International Patent Classification (IPC):
**H04W 72/232** (2023.01)   **H04W 72/11** (2023.01)
**H04L 1/18** (2023.01)

(52) Cooperative Patent Classification (CPC):
**H04W 72/11; H04L 1/0061; H04L 1/18;
H04L 1/1812; H04L 1/1822; H04L 1/1854;
H04L 1/1861; H04L 1/1864; H04L 1/1896;
H04W 72/232**

(86) International application number:
**PCT/KR2023/000413**

(87) International publication number:
**WO 2023/132729 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2022   US 202263298210 P**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING UPLINK TRANSMISSION AND RECEPTION IN WIRELESS COMMUNICATION SYSTEM**

(57)   Disclosed are a method and apparatus for performing uplink transmission in a wireless communication system. The method by which a terminal performs uplink transmission, according to an embodiment of the present disclosure, comprises the steps of: receiving, from a base station, first information related to a plurality of SPS configurations; receiving a first type of DCI or a second type of DCI from the base station; and on the basis of the first type of DCI or the second type of DCI, releasing at least one SPS configuration from among the plurality of SPS configurations, wherein an index of the at least one SPS configuration may be mapped to a specific deactivation state value of an SPS configuration, the at least one SPS configuration may be released on the basis that the first type of DCI indicating the specific deactivation state value via an HARQ-ACK process number filed is received from the base station, and on the basis that the second type of DCI including the HARQ-ACK process number field is received from the base station, a specific SPS configuration having the same index as a value of the HARQ-ACK process number field may be released.

FIG.7

```
┌─────────────────────────────┐
│ RECEIVING FIRST INFORMATION │
│ RELATED TO A PLURALITY OF SPS│ ~ S710
│ CONFIGURATIONS FROM THE BASE │
│           STATION            │
└─────────────────────────────┘
              │
              ▼
┌─────────────────────────────┐
│ RECEIVING THE FIRST TYPE OF DCI OR │
│ THE SECOND TYPE OF DCI FROM THE │ ~ S720
│          BASE STATION            │
└─────────────────────────────┘
              │
              ▼
┌─────────────────────────────┐
│   RELEASING AT LEAST ONE SPS     │
│ CONFIGURATION AMONG A PLURALITY │
│  OF SPS CONFIGURATIONS BASED ON  │ ~ S730
│   THE FIRST TYPE OF DCI OR THE    │
│     SECOND TYPE OF THE DCI        │
└─────────────────────────────┘
```

**Description**

[Technical Field]

The present disclosure relates to a wireless communication system, and in more detail, relates to an uplink transmission/reception method and apparatus in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide an uplink transmission/reception method and apparatus in a wireless communication system.

In addition, an additional technical problem of the present disclosure is to provide a method and apparatus for releasing unicast semi-persistent scheduling (SPS) configuration and/or multicast SPS configuration through downlink control information (DCI).

In addition, an additional technical problem of the present disclosure is to provide a method and apparatus for configuring/indicating/defining activation/deactivation timing of group common SPS configurations.

The technical problems to be achieved by the present disclosure are not limited to the above-described technical objects, and other technical problems which are not described herein will be clearly understood by those skilled in the pertinent art from the following description.

[Technical solution]

According to an embodiment of the present disclosure, a method for performing uplink transmission by a user equipment (UE) in a wireless communication system may include receiving first information related to a plurality of semi-persistent scheduling (SPS) configurations from a base station; receiving a first type of downlink control information (DCI) or a second type of DCI from the base station; and releasing at least one SPS configuration among the plurality of SPS configurations based on the first type of DCI or the second type of DCI, and an index of the at least one SPS configuration may be mapped to a specific deactivation state value of a SPS configuration, and based on the first type of DCI indicating the specific deactivation state value being received from the base station through a hybrid automatic repeat request (HARQ)-acknowledgement (ACK) process number field, the at least one SPS configuration may be released, and wherein, based on the second type of DCI including the HARQ-ACK process number field being received from the base station, a specific SPS configuration having same index as a value of the HARQ-ACK process number field may be released.

In another embodiment of the present disclosure, a method for performing uplink reception by a base station in a wireless communication system may include transmitting first information related to a plurality of semi-persistent scheduling (SPS) configurations to a user equipment (UE); and transmitting a first type of downlink control information (DCI) or a second type of DCI to the UE, and an index of the at least one SPS configuration may be mapped to a specific deactivation state value of a SPS configuration, and, based on the first type of the DCI or the second type of DCI, at least one SPS configuration of the plurality of SPS configurations may be released, and, based on the first type of DCI indicating a specific deactivation state value being transmitted to the UE through a hybrid automatic repeat request (HARQ)-acknowledgement (ACK) process number field, the at least one SPS configuration may be released, and based on the second type of DCI including the HARQ-ACK process number field being transmitted to the UE, a specific SPS configuration having same index as a value of the HARQ-ACK process number field may be released.

[Technical Effects]

According to an embodiment of the present disclosure, an uplink transmission/reception method and apparatus may be provided in a wireless communication system.

In addition, according to an embodiment of the present disclosure, a method and apparatus for canceling unicast SPS configuration and/or multicast SPS configuration through DCI may be provided.

Also, according to an embodiment of the present disclosure, a method and apparatus for configuring/indicating/defining activation/deactivation time points of group common SPS configurations may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram for describing an uplink transmission method of a terminal according to an embodiment of the present disclosure.

FIG. 8 is a diagram for describing an uplink reception method of a base station according to an embodiment of the present disclosure.

FIG. 9 illustrates a method of transmitting and receiving HARQ-ACK for a group common PDSCH in a wireless communication system to which the present disclosure may be applied.

FIG. 10 is a diagram for describing a signaling procedure of a network side and a terminal according to an embodiment of the present disclosure.

FIG. 11 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal

- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

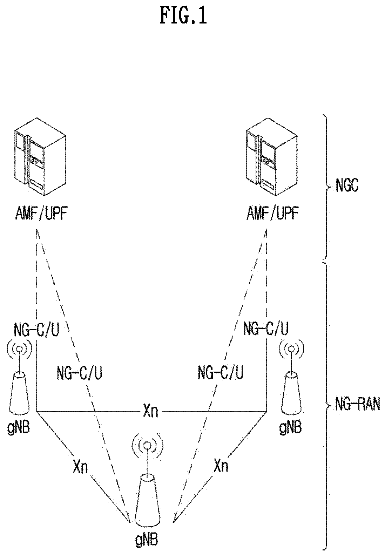

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

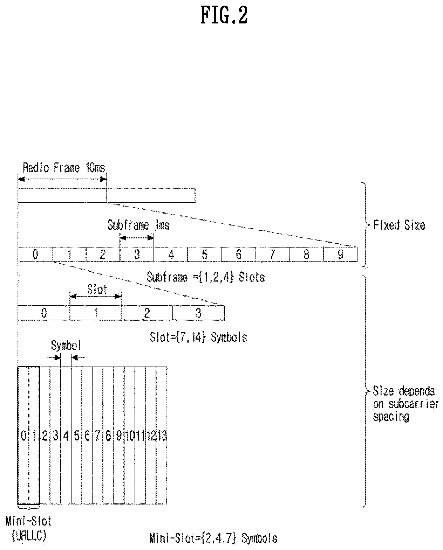

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot \Delta T_c=10$ms.

Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0, ..., N_{slot}^{subframe,\mu}-1\}$ in a subframe and are numbered in an increasing order of $n_{s,f}^{\mu}\in\{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

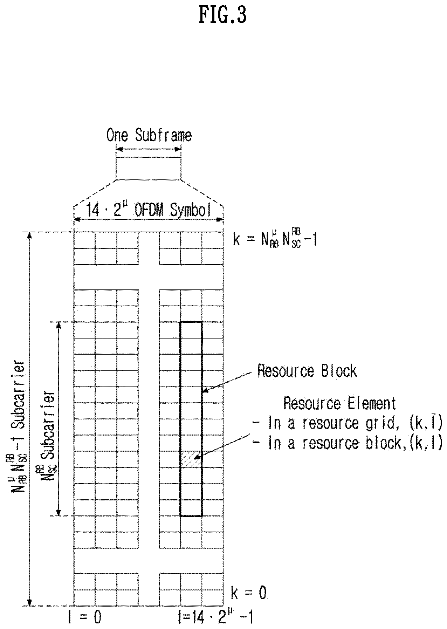

FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0, ..., $N_{RB}^{\mu}N_{sc}^{RB}-1$ is an index in a frequency domain and l'=0, ..., $2^{\mu}N_{symb}^{(\mu)}-1$ refers to a position of a symbol in a subframe. When referring to a resource element in a slot, an index pair (k,l) is used. Here, l=0, ...,$N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

[0045]    - absoluteFrequencyPointA represents a frequency-position of point A expressed as in ARFCN (absolute radio-frequency channel number). Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

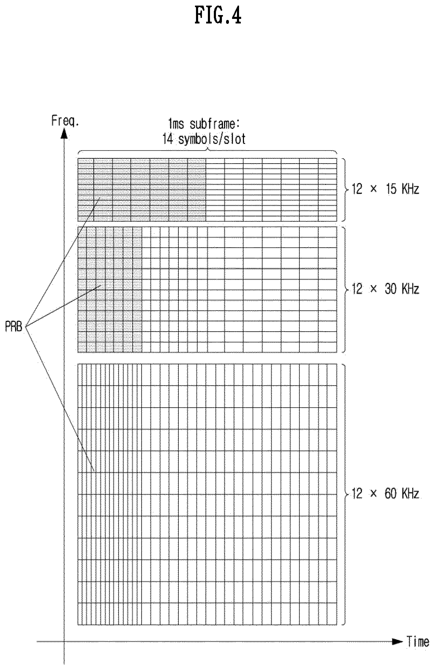

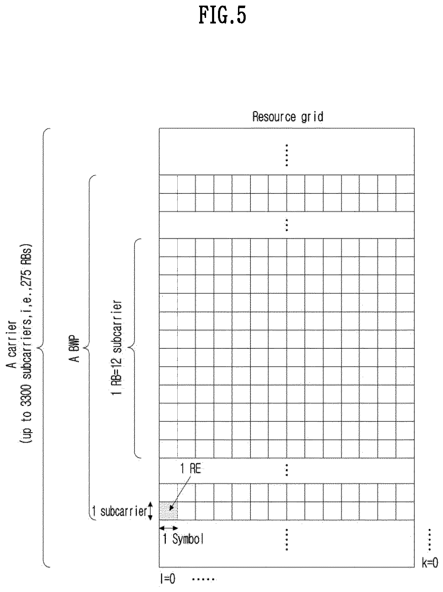

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

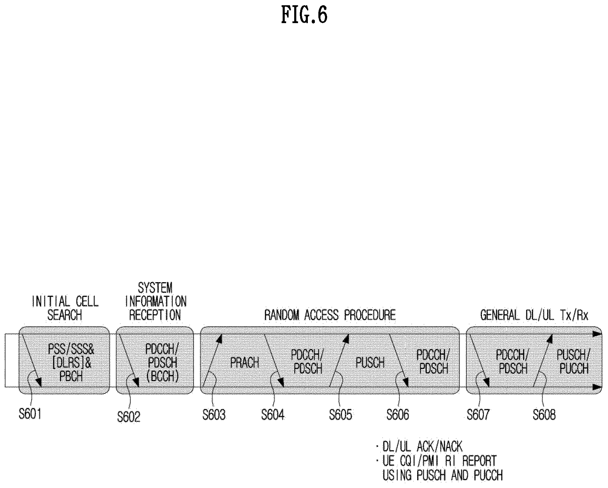

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| Format | |
|--------|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI (Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS(multimedia broadcast/multicast service) scheme

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

Here, SFN scheme may be used to provide a broadcast service to a wide area (e.g., MBMS area) through resources allocated semi-statically in advance, and SC-PTM scheme may be mainly used to provide a broadcast service only within a cell coverage through dynamic resources.

SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting SC-MCCH or SC-MTCH data may be scheduled through a PDCCH indicated by a Group Radio Network Temporary Identifier (G-RNTI).

In this case, a temporary mobile group identify (TMGI) corresponding to the service ID may be mapped one-to-one with a specific G(group)-RNTI value. Accordingly, when the base station provides a plurality of services, a plurality of G-RNTI values may be allocated for SC-PTM transmission. One or a plurality of terminals may perform PDCCH monitoring by using a specific G-RNTI to receive a specific service. Here, G-RNTI means a UE group identifier that receives MBS.

And, for a specific service/specific G-RNTI, SC-PTM dedicated DRX on-duration section may be configured, and in this case, the UEs may wake up only for a specific on-duration period and perform PDCCH monitoring for the G-RNTI.

MBS (multicast broadcast service) based transmission / reception operation

A common MBS frequency resource is a contiguous subset of common resource blocks within a bandwidth portion. The starting position $N_{MBS,i}^{start,\mu}$ of the common MBS frequency resource i may be defined based on point A, and the size of the common MBS frequency resource may be given as $N_{MBS,i}^{size,\mu}$. Resource blocks of the common MBS frequency resource may be numbered in the same way as resource blocks in which $N_{BWP,i}^{start,\mu}$ and $N_{BWP,i}^{size,\mu}$ are replaced by $N_{MBS,i}^{start,\mu}$ and $N_{MBS,i}^{size,\mu}$, respectively.

The UE may not expect to receive a PDSCH or PDCCH related to MBS transmission scheduled with G(group)-RNTI, G(group)-CS (configured scheduling)-RNTI, or MCCH (multicast control channel)-RNTI outside common MBS frequency resources.

For MBS scheduling, DCI format 4_0, DCI format 4_1, and DCI format 4_2 may be used.

For example, DCI format 4_0 may be used for scheduling a PDSCH for broadcast in a DL cell. Through DCI format 4_0 with CRC scrambled by G-RNTI or MCCH-RNTI configured by 'MBS-SessionInfo', a frequency/time domain resource allocation field, VRB-to-PRB mapping field, MCS field, RV (redundancy version) field, MCCH change notification field, and padding bits may be transmitted. 0 may be added to DCI format 4_0 until the payload size becomes equal to the size of DCI format 1_0 monitored in the common search space of the same serving cell.

As another example, DCI format 4_1 may be used for PDSCH scheduling for multicast in a DL cell. Through DCI format 4_1 with CRC scrambled by G-RNTI configured by 'G-RNTI-Config' or 'G-CS-RNTI', frequency/time domain resource allocation field, VRB-to-PRB mapping field, MCS field, RV field, new data indicator field, HARQ process number field, a DL allocation index field, a PUCCH resource indicator field, a PDSCH-to-HARQ feedback time indicator field, and padding bits may be transmitted.

As another example, DCI format 4_2 may be used for PDSCH scheduling in a DL cell. Through DCI format 4_2 with CRC scrambled by G-RNTI configured by 'G-RNTI-Config' or 'G-CS-RNTI', a frequency/time domain resource allocation field, a VRB-to-PRB mapping field, a PRB bundling size indicator field, rate matching indicator field, HARQ process number field, DL allocation index field, PUCCH resource indicator field, PDSCH-to-HARQ feedback time indicator field, an antenna port field, a TCI field, a DMRS sequence initialization field, a priority indicator field, and an HARQ-ACK feedback activation/deactivation indication field may be transmitted.

In describing the present disclosure, a DCI format with a CRC scrambled by C-RNTI, CS-RNTI, or MCS-C-RNTI is referred to as a unicast DCI format. And, a DCI format with a CRC scrambled by G-RNTI or G-CS-RNTI is referred to as a multicast DCI format.

The unicast DCI format may be DCI format 0_0/0_1/0_2/1_0/1_1/1_2, and the multicast DCI format may be DCI format 4_1/4_2. PDSCH reception scheduled by the unicast or multicast DCI format may be referred to as unicast or multicast PDSCH reception, and HARQ-ACK information related to a unicast or multicast DCI format may also be referred to as unicast or multicast HARQ-ACK information.

And, a DL common frequency resource (CFR) (for MBS) may provide group common PDCCH and group common PDSCH transmission resources for MBS transmission and reception. UL CFR may provide HARQ-ACK PUCCH resources for group common PDSCH reception.

One CFR can be one MBS specific BWP or one UE specific BWP. Alternatively, one or more CFRs may be configured within one UE-specific BWP. One CFR may be associated with one UE-specific BWP.

In a basic wireless communication system, a base station may configure UE-specific SPS (semi-persistent scheduling) configuration information to a specific UE, so that repeated downlink (DL) SPS transmission resources may be allocated to the specific UE according to the configured period. At this time, the DCI transmitted through the UE-dedicated PDCCH indicates activation of a specific SPS configuration index (SPS activation), so that the corresponding UE may be indicated to repeatedly receive the SPS transmission resource according to the configured period.

Such SPS transmission resources may be used for initial HARQ transmission, and the base station may allocate retransmission resources of a specific SPS configuration index through DCI transmitted through a terminal-dedicated PDCCH. For example, when the UE reports a HARQ NACK (negative acknowledgment) for the SPS transmission resource, the base station may allocate the retransmission resource to the DCI so that the UE can receive DL retransmission.

The DCI transmitted through the UE-dedicated PDCCH may indicate deactivation (SPS release or SPS deactivation) of a specific SPS configuration index. In this case, the corresponding UE may not receive the indicated SPS transmission resource. At this time, the CRC of the DCI for the activation/retransmission/deactivation may be scrambled with CS-RNTI (Configured Scheduling RNTI).

In a wireless communication system (e.g., NR), a DL broadcast or DL multicast transmission scheme for supporting MBS similar to the above-described MBMS may be applied. A base station may provide a point-to-multipoint (PTM) transmission scheme and a point-to-point (PTP) transmission scheme for DL broadcast or DL multicast transmission.

In the PTM transmission method for MBS, a base station may transmit a group common PDCCH and a group common PDSCH to a plurality of UEs, and the plurality of UEs may simultaneously receive the same group common PDCCH and group common PDSCH transmission to decode the same MBS data.

And, in the PTP transmission scheme for MBS, a base station may transmit a UE-dedicated PDCCH and a UE-dedicated PDSCH to a specific UE, and only the corresponding UE may receive the UE-dedicated PDCCH and the UE-dedicated PDSCH. At this time, when there are a plurality of terminals receiving the same MBS service, the base station may separately transmit the same MBS data to individual terminals through different terminal-dedicated PDCCHs and terminal-dedicated PDSCHs.

In the PTM transmission scheme, a base station may transmit a plurality of group common PDSCHs to a plurality of UEs. The base station may receive an HARQ-ACK for a group common PDSCH based on a PUCCH resource dedicated to the UE from the UE. At this time, when the TB for the PDSCH common to the group is successfully decoded, the UE may transmit ACK as HARQ-ACK information to the base station. If the TB for the unicast PDSCH is not successfully decoded, the UE may transmit NACK as HARQ-ACK information to the base station.

This HARQ-ACK transmission scheme is referred to as an ACK/NACK-based HARQ-ACK transmission scheme, and the UE may transmit ACK/NACK-based HARQ-ACK to the base station using UE-dedicated PUCCH resources. On the other hand, when a NACK-only based HARQ-ACK scheme is configured for a group common PDSCH, the UE may perform PUCCH transmission only in the case of NACK without PUCCH transmission in the case of ACK. At this time, the PUCCH may transmit only NACK as HARQ-ACK information using a group common PUCCH resource.

In a basic wireless communication system, multicast SPS transmission (e.g., multicast SPS PDSCH/PUSCH, etc.) may be activated(or enabled) or deactivated based on DCI. Broadcast SPS may be activated/deactivated based on DCI as well as RRC messages. When the broadcast SPS is activated/deactivated based on the RRC message, a plurality of terminals may activate or deactivate the same broadcast SPS transmission. At this time, from the point of view of the terminal, there is a problem that the timing of activating/deactivating broadcast SPS transmission is not clear.

Hereinafter, a method for clarifying the activation/deactivation timing of the group common SPS configuration will be described.

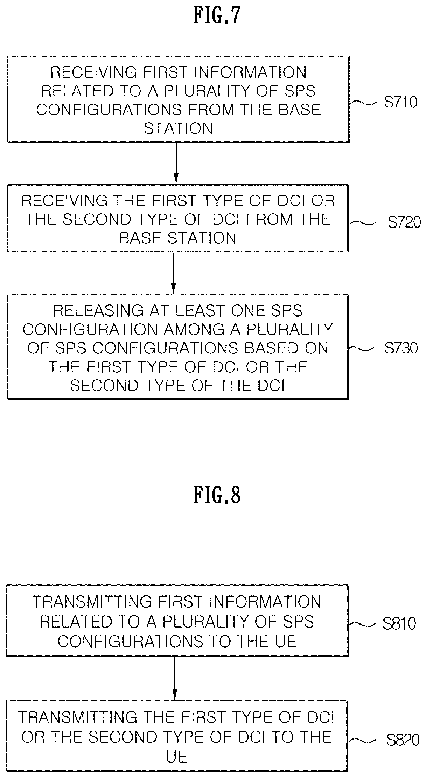

FIG. 7 is a diagram for describing an uplink transmission operation of a UE in a wireless communication system to which the present disclosure can be applied.

The UE may receive first information related to a plurality of SPS configurations from the base station (S710).

As an example, the UE may receive configuration information (e.g., 'BWP-DownlinkDedicated') related to a dedicated (UE specific) parameter of DL BWP from the base station. For example, 'BWP-DownlinkDedicated' may include a list of one or more DL SPS configurations to be added, modified, or released to BWP, a list of deactivated states that can be mapped to one or more SPS configurations to be deactivated (or list of deactivation SPS configurations), SPS-related configuration information, etc.

The first information may include a list of one or more DL SPS configurations to be added, modified, or released to the BWP and/or SPS-related configuration information.

For example, the UE may receive second information related to an SPS configuration deactivation state list including a specific deactivation state value of the SPS configuration from the base station.

For example, the SPS configuration deactivation state list may include at least one SPS configuration deactivation state value for multicast and a deactivation state of at least one SPS configuration for unicast.

Here, each of the plurality of SPS configurations may be mapped to different SPS configuration index values. Also, an index of at least one SPS configuration among a plurality of SPS configurations may be mapped to a specific deactivation state value of the SPS configuration.

For example, SPS configuration indices 0 to 7 may be configured for each of a plurality of SPS configurations. Also, a specific deactivation state value (e.g., 'sps-ConfigDeactivationState 1') may be mapped to SPS configuration indices 3 and 5.

In addition, the SPS configuration deactivation state list may include not only a specific deactivation state value but also other deactivation state values (e.g., 'sps-ConfigDeactivationState 0' and/or 'sps-ConfigDeactivationState 2'). For example, 'sps-ConfigDeactivationState 1' may be mapped to SPS configuration indexes 0 and 3, and 'sps-ConfigDeactivationState 2' may be mapped to SPS configuration index 5.

The UE may receive the first type of DCI or the second type of DCI from the base station (S720).

For example, the DCI of the first type may be a unicast DCI format, and the DCI of the second type may be a multicast DCI format (e.g., DCI format 4_x) (x is a natural number greater than or equal to 1).

Additionally or alternatively, DCI of the first type may be scrambled by cyclic redundancy check (CRC) by configured scheduling (CS)-radio network temporary identifier (RNTI), and the second type of DCI may be CRC scrambled by G (group) -CS-RNTI.

The UE may release at least one SPS configuration among a plurality of SPS configurations based on the first type of DCI or the second type of the DCI (S730).

As an example of the present disclosure, when the first type of DCI indicating a specific deactivation state value is received from the base station through a hybrid automatic repeat request (HARQ)-acknowledgement (ACK) process number field, the UE may release at least one SPS configuration.

For example, it is assumed that the value of the HARQ-ACK process number field included in the DCI of the first type is 1. The HARQ-ACK process number field value (i.e., 1) may correspond to 'sps-ConfigDeactivationState 1'. That is, the value of the HARQ-ACK process number field (i.e., 1) may be the same as the specific deactivation state value (i.e., 1) of the SPS configuration.

The UE may release at least one SPS configuration (e.g., SPS configuration corresponding to SPS configuration indices 3 and 5) mapped to 'sps-ConfigDeactivationState 1' among a plurality of SPS configurations. Here, the at least one SPS configuration may include a unicast SPS configuration, but is not limited thereto and may include a multicast SPS configuration.

As another example of the present disclosure, when the second type of DCI including the HARQ-ACK process number field is received from the base station, the UE may release a specific SPS configuration having the same index as the value of the HARQ-ACK process number field.

For example, it is assumed that the value of the HARQ-ACK process number field included in the second type of DCI is 1. The UE may release a specific SPS configuration having an SPS configuration index of 1 among a plurality of SPS configurations. Here, the index of a specific SPS configuration may be mapped to a multicast SPS configuration, but is not limited thereto and may be mapped to a unicast SPS configuration.

Specifically, 1) when the base station provides 'sps-ConfigDeactivationStateList' to the UE and the DCI format of the PDCCH received from the base station is not 4_x, in the received DCI format other than DCI format 4_x, the value of the HARQ process number field may indicate a corresponding entry for scheduling releasing one or a plurality of SPS PDSCH configurations.

However, if the base station does not provide 'sps-ConfigDeactivationStateList' to the UE or the DCI format of the PDCCH received from the base station is 4_x, in the received DCI format, the value of the HARQ process number field is the same as that provided by 'sps-ConfigIndex' of a specific SPS configuration, and may indicate release of the corresponding SPS PDSCH configuration.

Alternatively, 2) when the base station provides 'sps-ConfigDeactivationStateList' to the UE and the CRC of the DCI received from the base station is scrambled with CS-RNTI, the value of the HARQ process number field of the received DCI (excluding DCI format 4_x) may indicate a corresponding entry for scheduling releasing one or more SPS PDSCH configurations.

However, if the base station does not provide 'sps-ConfigDeactivationStateList' to the UE or the CRC of the DCI received from the base station is scrambled with G-CS-RNTI, in the received DCI format, the value of the HARQ process number field is the same as that provided by 'sps-ConfigIndex' of a specific SPS configuration, and may indicate release of the corresponding SPS PDSCH configuration.

Alternatively, 3) when the base station provides 'sps-ConfigDeactivationStateList' to the UE, the value of the HARQ process number field of the received DCI (excluding DCI format 4_x) may indicate a corresponding entry for scheduling releasing of one or more SPS PDSCH configurations excluding multicast SPS configuration. That is, the value of the HARQ process number field indicates only one or a plurality of SPS configurations for unicast.

However, if the base station does not provide 'sps-ConfigDeactivationStateList' to the UE or is an SPS configuration for multicast, in the received DCI format, the value of the HARQ process number field is the same as that provided by 'sps-ConfigIndex' of a specific SPS configuration, and may indicate release of the corresponding SPS PDSCH configuration.

Another example of the present disclosure, the UE may receive third information for configuring the DCI of the first type to one of the unicast DCI format or the multicast DCI format and configuration the DCI of the second type to the other of the unicast DCI format and the multicast DCI format from the base station. That is, the third information may be configured such that each of the unicast DCI format and the multicast DCI format is mapped to each of the first type DCI and the second type DCI.

FIG. 8 is a diagram for describing an uplink reception operation of a base station in a wireless communication system to which the present disclosure can be applied.

The base station may transmit first information related to a plurality of SPS configurations to the UE (S810).

For example, the base station may transmit configuration information (e.g., 'BWP-DownlinkDedicated') related to a dedicated (UE-specific) parameter of the DL BWP including the first information to the UE.

The base station may transmit the first type of DCI or the second type of DCI to the UE (S820).

Since operations and descriptions related to S810 and S820 correspond to operations and descriptions related to S710 and S720 of FIG. 7, overlapping descriptions will be omitted.

Hereinafter, a method for clarifying activation/deactivation time of group common SPS configuration, a method for releasing multicast SPS indicated by unicast DCI or multicast DCI, and a method for transmitting multicast HARQ feedback will be described in detail.

Embodiment 1

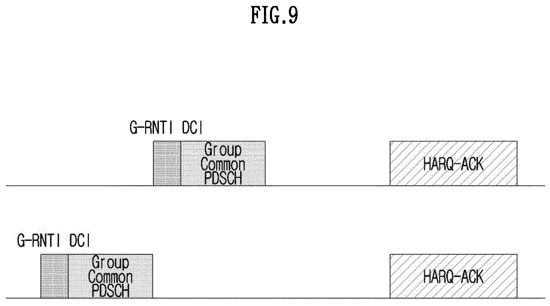

As shown in FIG. 9, a UE may receive group common PDCCHs/PDSCHs scheduled with different G-RNTIs through FDM or TDM. Here, the group UE may perform multicast HARQ-ACK transmission for common PDCCH/PDSCH. As shown in FIG. 9, in a basic wireless communication system, a group common DCI may schedule a group common PDSCH in the same cell.

The base station may transmit configuration information related to PDSCH for BWP (hereinafter, PDSCH-config for BWP) and PDSCH for CFR (hereinafter, PDSCH-config for CFR) to the UE.

At this time, the CFR may be associated with the UE active BWP. Some parameters may be configured in common for CFR and BWP. Therefore, the base station may not include some parameters in both PDSCH-config for CFR and PDSCH-config for BWP, but may include them in only one PDSCH-config.

For example, if the configuration value for parameter A may be equally included in PDSCH-config for CFR and PDSCH-config for BWP, the base station may include parameter A only in PDSCH-config for BWP (or only in PDSCH-config for CFR).

Apart from SPS configuration for unicast, CFR configuration may include group common SPS configuration. In this case, the group common SPS may include a multicast SPS for connected UEs or a broadcast SPS for idle/inactive/connected UEs.

As an example, it is assumed that the UE receives DCI scrambled by the CRC by the CS-RNTI and receives information for configuring a plurality of group common SPSs (i.e., group common SPS configuration) or receives information for configuring a group common SPS and a UE-dedicated SPS (i.e. group common SPS configuration and UE-only SPS). At this time, for point-to-point (PTP) retransmission of the SPS, the UE receiving the DCI scrambled by the CS-RNTI may distinguish different SPS configurations with the HARQ process ID included in the DCI.

If the HPN (i.e., HARQ process number or/and HARQ process ID) value of a specific DCI corresponds to a specific SPS configuration index or group common SPS configuration, the UE may determine/determine that the PDSCH scheduled by the DCI retransmits the TB of the SPS PDSCH corresponding to a specific SPS configuration index or group common SPS configuration.

When distinguishing SPS configuration index or group common SPS configuration based on HPN, the base station may configure different 'nrofHARQ-Processes' (i.e., the configured number of HARQ processes) and 'harq-ProcID-Offset' (i.e. the offset used to derive the HARQ Process ID) for different SPS configurations or for UE-dedicated SPS and group common SPS configuration.

That is, 'nrofHARQ-Processes' and 'harq-ProcID-Offset' are set for each SPS configuration index, and the UE may determine the HARQ Process ID for a specific SPS transmission according to Equation 3 below.

【Equation 3】

$$HARQ ProcessID = \lfloor floor(CURRENT_{slot} * 10/(numberOfSlotsPerFrame * periodicity)) \rfloor modulo\ nrofHARQ\text{-}Processes + harq\text{-}ProcID\text{-}Offset$$

Additionally or alternatively, when a plurality of group common SPS configurations are configured, or a group common SPS configuration and a UE-specific SPS configured are set together, group common CS-RNTI and unicast CS-RNTI may be separately configured. At this time, the group common SPS and the unicast SPS may share the same HARQ process ID. That is, the group common SPS and the unicast SPS may overlap with the same HARQ process ID.

Additionally or alternatively, the same CS-RNTI is configured for the group common SPS configuration and the UE-specific SPS configuration, and a new indicator is included in the DCI of the CS-RNTI, so that it may be distinguished whether the corresponding transmission is PTP retransmission or unicast transmission. At this time, the new indicator of DCI may consist of 1 bit, but is not limited thereto. And, the new indicator of DCI may indicate a group common SPS configuration index.

Additionally or alternatively, the same CS-RNTI is configured for group common SPS configuration and UE-specific SPS configuration, and group common SPS transmission and UE-specific SPS transmission can be distinguished by the HARQ process ID included in the DCI of the CS-RNTI. In this case, the group common SPS and the unicast SPS may be used by dividing the HARQ process (number).

Embodiment 1-1

According to the method according to the first embodiment, the UE may receive SPS transmission in a method described later.

After the specific group common SPS configuration is activated through the DCI scrambled CRC by the specific G-CS-RNTI, the UE may decode the TB received through the group common SPS PDSCH by storing/mapping it in an HARQ process (ID) corresponding to a specific HPN value.

Here, the specific HPN value may be the same as the HARQ Process ID corresponding to the group common SPS PDSCH resource. Thereafter, the UE may receive DCI scrambled with CRC by UE-specific CS-RNTI or C-RNTI from the base station or DCI scrambled with CRC by specific G-CS-RNTI.

When the DCI received from the base station indicates a retransmission resource and a specific HPN value, the UE may recognize that the indicated retransmission resource is a retransmission resource for an HARQ process corresponding to the specific HPN value. Accordingly, the UE may decode the TB again by storing/mapping the TB received as the corresponding retransmission resource in the HARQ process corresponding to the indicated specific HPN value.

Here, DCI scrambled by CRC by UE-specific CS-RNTI or C-RNTI allocates PTP retransmission resources for group common SPS and DCI scrambled CRC by specific G-CS-RNTI may be used to allocate PTM retransmission resources for group common SPS.

In the above-described method, a specific G-CS-RNTI and a UE-specific CS-RNTI may have a relationship according to an option described later. A relationship according to an option described later may be predefined or configured by the base station.

Option 1: A specific G-CS-RNTI may be mapped to a specific UE-specific CS-RNTI according to the configuration of the base station.

Option 2: The UE-specific CS-RNTI of the UE may be mapped to all G-CS-RNTIs for group common SPSs.

Option 3: If there is an SPS configuration index indicated by a specific UE-specific CS-RNTI DCI, the G-CS-RNTI associated with the SPS configuration index may be mapped with the specific UE-specific CS-RNTI.

When the DCI scrambled by the C-RNTI in the above method indicates a specific HPN in use by the group common SPS of the G-CS-RNTI, the UE may determine that the DCI schedules the unicast PDSCH, and the TB received from the unicast PDSCH may replace the TB stored in the HARQ process for a specific HPN.

Additionally or alternatively, in the above-described method, the UE may determine that the DCI schedules retransmission of the group common SPS PDSCH, accumulate the TB received from the retransmitted PDSCH into the TB stored in the HARQ process for the specific HPN, and decode the corresponding TB again.

Here, an example of a method of transmitting and receiving an activation command of a UE-specific PDCCH for activating a group common SPS is as follows.

The unicast SPS and the group common SPS use the same CS-RNTI, and the DCI for SPS activation may indicate the group common SPS with 1-bit information. At this time, the HPN of the activation DCI may be independent of the SPS HARQ process ID to be actually used.

In this case, the same SPS configuration index may be configured and used for both the group common SPS and the unicast SPS. That is, the UE may simultaneously activate group common SPS configuration and unicast SPS configuration having the same SPS configuration index.

In addition, the activation DCI may indicate that group common SPS configurations and unicast SPS configurations having the same SPS configuration index are simultaneously activated, or only group common SPS configurations or unicast SPS configurations may be activated through the 1 bit.

Additionally or alternatively, the unicast SPS and the group common SPS use the same CS-RNTI, and the DCI for SPS activation does not include the 1-bit information (e.g., information indicating the group common SPS). At this time, the HPN value of the activation DCI may be instructed to distinguish between unicast SPS configuration/transmission and group common SPS configuration/transmission.

For example, unicast SPS configuration/transmission and group common SPS configuration/transmission may each be mapped to different HPNs. In this case, the same SPS configuration index is not mapped to group common SPS configuration/transmission and unicast SPS configuration/transmission at the same time, but may be mapped only to group common SPS configuration /transmission or unicast SPS configuration/transmission. The UE may simultaneously activate group common SPS configuration/transmission and unicast SPS configuration/transmission having the same SPS configuration index.

Additionally or alternatively, the unicast SPS and the group common SPS use different CS-RNTIs, and the DCI for SPS activation may not include the 1-bit information (e.g., information indicating the group common SPS). At this time, the CS-RNTI value of the activation DCI may indicate a distinction between unicast SPS configuration/transmission and group common SPS configuration/transmission.

Embodiment 2

Embodiment 2 relates to a method for a UE in an RRC_IDLE, RRC_INACTIVE or RRC_CONNECTED state to activate or release a broadcast SPS.

Broadcast SPS may be activated without an activation DCI. Accordingly, it may not be clear when the UE should consider that the broadcast SPS is activated or released.

In a basic wireless communication system, a UE may perform SPS transmission according to a method described below:

After the semi-static DL allocation is configured, the MAC entity may sequentially consider that the Nth allocation occurs in a transmission time interval (TTI):

- Subframe SPS may be used:

- $(10 * SFN + subframe) = [(10 * SFN_{start\ time} + subframe_{start\ time}) + N * semiPersistSchedIntervalDL]$ modulo 10240.

- A slot or subset SPS may be used:

- $(10 * SFN * sTTI\_Number\_Per\_Subframe + subframe * sTTI\_Number\_Per\_Subframe + sTTI\_number) = [(10 * SFN_{start\ time} * sTTI\_Number\_Per\_Subframe + subframe_{start\ time} * sTTI\_Number\_Per\_Subframe + sTTIStartTimeDl) + N * semiPersistSchedIntervalDL-sTTI]$ modulo $(10240 * --> sTTI\_Number\_Per\_Subframe)$.

Here, each of $SFN_{start\ time}$, $subframe_{start\ time}$, and sTTIStartTimeD1 may be SFN, subframe, and sTTI_number when the configured DL allocation is (re)initialized. sTTI_Number_Per_Subframe may be 6 when the subslot TTI is configured and 2 when the slot TTI is configured for short TTI operation. sTTI_number may mean an index of a short TTI, that is, an index of a subslot or a slot within a subframe.

In the case of a BL UE or UE in enhanced coverage, the SFN start time and subframe start time may refer to the SFN and subframe of the first transmission of the PDSCH in which the configured DL allocation is (re)initialized.

As an embodiment of the present disclosure, the UE may activate or release the broadcast SPS based on the paging/notification DCI as described below.

Option 1: The paging DCI in the terminal's own PO (Paging Occasion) or broadcast specific PO may indicate SPS activation of G-RNTI, G-CS-RNTI, or TMGI (Temporary Mobile Group Identity) . Here, TMGI may indicate a specific service as an MBS service identifier.

The DCI may indicate SPS activation or release of the G-RNTI, G-CS-RNTI, or TMGI group. DCI may indicate an SPS-ConfigIndex (i.e., an index of SPS configuration) configured in an RRC message. The CRC of Paging DCI may be scrambled by P-RNTI. Additionally or alternatively, the Paging DCI is a paging early indication (PEI) and the CRC of the DCI may be scrambled by the PEI-RNTI.

Option 2: MCCH change notification DCI may indicate SPS activation of G-RNTI, G-CS-RNTI, or TMGI.

The DCI may indicate SPS activation or release of the G-RNTI, G-CS-RNTI, or TMGI group. DCI may indicate SPS-ConfigIndex configured in an RRC message. CRC of DCI may be scrambled by MCCH-RNTI for MCCH change notification. The UE receiving DCI may activate or cancel the SPS configuration corresponding to G-RNTI, G-CS-RNTI, TMGI, or SPS-ConfigIndex as described below.

Option A: The UE may activate or release SPS configuration immediately after DCI.

Option B: The UE may activate or release the SPS configuration at the activation time previously configured by SIB or MCCH.

Option C: The UE may activate or release SPS configuration at the beginning or end of the MCCH period.

Option D: The UE may activate or release SPS configuration at the beginning or end of a broadcast control channel (BCCH) period.

Option E: The UE may activate or release the SPS configuration at the beginning or end of its own PO.

The UE may activate or release the broadcast SPS based on the RRC message received on the MCCH according to an option described later:

Option 1 : For activation or release of the broadcast SPS, the RRC message of the MCCH may indicate the SPS (de) activation time as an offset for the start or end of the MCCH period for G-RNTI, G-CS-RNTI, or TMGI. Here, 'SFN offset + symbol number' may be used.

Option 2: The RRC message of MCCH may indicate the SPS (de)activation time with 'SFN + symbol number' for G-RNTI, G-CS-RNTI, or TMGI.

Option 3: The RRC message of the MCCH may indicate the SPS (de)activation time for activation of the G-RNTI, G-CS-RNTI or TMGI group.

SPS PDSCH may be scrambled by one of G-RNTI, G-CS-RNTI, or TMGI in the group after activation.

Different HARQ process IDs may be used for different G-RNTIs, G-CS-RNTIs, or TMGIs in the group.

The UE may activate or release broadcast SPS based on system information as described below:

Option 1: SIB1 may indicate the SPS (de) activation time as an offset to the start or end of the SIB1 period.

Option 2: The MBS SIB may indicate the SPS (deactivation) activation time as an offset to the start or end of the SIB1 period.

As will be described later, the UE may receive SPS PDSCH retransmission for broadcast SPS.

If the HPN is configured to DCI 4_0 and the CRC of DCI is scrambled by G-CS-RNTI, DCI-based retransmission may be supported by the HPN of DCI 4_0. Upon receiving DCI, the UE may receive SPS PDSCH retransmission scheduled by DCI.

Additionally or alternatively, PDSCH repetitions may be configured instead of retransmissions. For repetition, the UE may be configured to 'pdsch-AggregationFactor' for each G-CS-RNTI or TMGI by SIB or MCCH.

The UE may release the broadcast SPS as described below:

Option 1: MAC CE of broadcast PDSCH may indicate SPS deactivation for G-RNTI, G-CS-RNTI, or TMGI.

Option 2: Deactivation DCI may indicate SPS deactivation for G-RNTI, G-CS-RNTI, or TMGI.

Option 3: The UE may release the broadcast SPS based on a release timer running for each SPS configuration.

The base station may configure the SPS deactivation time for each G-RNTI, G-CS-RNTI, or TMGI.

The UE may start the timer after SPS activation time for SPS configuration, G-RNTI, G-CS-RNTI or TMGI. When the timer expires (that is, when the timer reaches the SPS inactivation time), the UE may release the corresponding broadcast SPS.

For connected UE reception of broadcast from SCell:

The base station may expect that the UE showing interest in the G-RNTI will receive the broadcast when the UE active BWP accepts the broadcast CFR related to the G-RNTI.

When the UE active BWP accepts the broadcast CFR related to the G-RNTI, whether or not the UE indicating interest in the G-RNTI receives the broadcast may be determined according to the UE.

Broadcast SPS or multicast SPS may be configured in PCell or SCell.

Embodiment 3

Embodiment 3 relates to multicast SPS release indicated by unicast DCI or multicast DCI.

In a basic wireless communication system, when the UE is provided with one or more configurations for the UL grant Type 2 PUSCH or SPS PDSCH, when the UE receives 'ConfiguredGrantConfigType2DeactivationStateList' or 'sps-ConfigDeactivationStateList', the value of the HARQ process number field in the DCI format indicates a corresponding item for scheduling release one or more UL grant type 2 PUSCH or SPS PDSCH configurations.

Additionally, in a basic wireless communication system, when a UE is provided with one or more configurations for UL grant Type 2 PUSCH or SPS PDSCH, if the UE does not receive 'ConfiguredGrantConfigType2DeactivationState-List' or 'sps-ConfigDeactivationStateList', in the DCI format, the value of the HARQ process number field is the same as that provided by 'ConfiguredGrantConfigIndex' or 'sps-ConfigIndex', respectively, and may indicate release of the corresponding UL grant type 2 PUSCH or SPS PDSCH configuration.

Additionally, in a basic wireless communication system, an RRC message related to BWP downlink dedicated (dedicated) (i.e., 'BWP-DownlinkDedicated') may include 'SPS-ConfigDeactivationState'. 'SPS-ConfigDeactivation-State' may indicate a list of deactivation states where each state can be mapped to single or multiple SPS configurations to be deactivated. If the state is mapped to multiple SPS configurations, the corresponding SPS configurations may be configured to the same 'harq-CodebookID'.

SPS configuration information (e.g., 'SPS-config') may include 'harq-CodebookID'. 'harq-CodebookID' may indicate a corresponding HARQ-ACK codebook for SPS PDSCH and a HARQ-ACK codebook index for ACK for SPS PDSCH release.

In the present disclosure, a configuration method for releasing a multicast SPS by a multicast DCI format or a unicast DCI format is as follows.

Method 1: 'sps-ConfigDeactivationState' for unicast may include 'SPS-configIndex' for multicast SPS.

Specifically, if 'SPS-config' for multicast is configured for CFR, the UE may expect 'sps-ConfigDeactivationState' of the DL BWP configuration associated with CFR to include 'SPS-configIndex' for multicast and 'SPS-configIndex' for unicast.

If 'SPS-config' for multicast is configured for CFR, and 'sps-ConfigDeactivationState' of DL BWP configurations related to CFR does not include 'SPS-configIndex' for multicast, the UE may assume that the value of the HARQ process number field in the multicast DCI format is the same as that provided by 'sps-ConfigIndex', indicating release of the SPS PDSCH configuration.

Method 2: For 'SPS-configIndex' for multicast SPS, a separate 'sps-ConfigDeactivationState' for multicast may be configured.

Specifically, if 'SPS-config' for multicast is configured for CFR, the UE may expect that the individual 'sps-ConfigDeactivationState' for multicast of the DL BWP configuration associated with CFR includes 'SPS-configIndex' for multicast.

For example, 'sps-ConfigDeactivationState' of DL BWP configuration related to CFR may not include 'SPS-configIndex' for multicast.

For example, when 'SPS-config' for multicast is configured for CFR and 'sps-ConfigDeactivationState' for multicast is not configured for CFR, the UE may expect 'sps-ConfigDeactivationState' of the DL BWP configuration associated with CFR to include 'SPS-configIndex' for multicast and 'SPS-configIndex' for unicast.

Method 3: The unicast DCI format may configure multicast SPS based on method 1, and the multicast DCI format may configure multicast SPS based on method 2.

As another example, method 1 or/and method 2 may be identically or differently mapped/configured for each DCI format according to the configuration of the base station.

Method 4: Both the unicast DCI format and the multicast DCI format may always use method 1 or method 2.

Method 5: When a multicast DCI indicating release of SPS PDSCH configuration is received with the same value as that provided in 'sps-ConfigIndex' of the unicast SPS, the UE may ignore the multicast DCI.

If a unicast DCI indicating activation of the SPS PDSCH configuration is received with the same value as that provided by 'sps-ConfigIndex' of the multicast SPS, the UE may ignore the unicast DCI.

Embodiment 4

Embodiment 4 relates to PUCCH transmission in a PUCCH-SCell for multicast HARQ-ACK feedback.

If the SCell related to the CFR belongs to the secondary PUCCH group of the PUCCH-SCell, the UE may transmit a PUCCH including an ACK/NACK-based HARQ-ACK for multicast according to one of the options described below.

Option 1: While the UE transmits multicast HARQ-ACK on the PUCCH of the PCell in response to the multicast PDSCH in the serving cell of the primary PUCCH group, in response to the multicast PDSCH in the serving cell of the secondary PUCCH group, multicast HARQ-ACK may be transmitted on the PUCCH of the PUCCH-SCell.

Option 2: When multicast HARQ-ACK is configured for PUCCH of PUCCH-SCell, while the UE transmits multicast HARQ-ACK on the PUCCH of the PCell in response to the multicast PDSCH in the serving cell of the primary PUCCH group, in response to the multicast PDSCH in the serving cell of the secondary PUCCH group, multicast HARQ-ACK may be transmitted on the PUCCH of the PUCCH-SCell.

If multicast HARQ-ACK is not configured for the PUCCH of the PUCCH-SCell, the UE may transmit multicast HARQ-ACK on the PUCCH of the PCell in response to the multicast PDSCH in the serving cell of the primary PUCCH group or the secondary PUCCH group.

Option 3: When multicast HARQ-ACK is configured only for PUCCH of PUCCH-SCell, the UE may transmit multicast HARQ-ACK on the PUCCH of the PUCCH-SCell in response to the multicast PDSCH in the serving cell of the primary PUCCH group or the secondary PUCCH group.

In an embodiment of the present disclosure, when the SCell related to CFR belongs to the secondary PUCCH group of the PUCCH-SCell, the UE may perform PUCCH transmission for NACK-only based HARQ-ACK for multicast according to an option described later.

Option 1: While the UE transmits multicast HARQ-ACK on the PUCCH of the PCell in response to the multicast PDSCH in the serving cell of the primary PUCCH group, in response to the multicast PDSCH in the serving cell of the secondary PUCCH group, multicast HARQ-ACK may be transmitted on the PUCCH of the PUCCH-SCell.

Option 2: When multicast HARQ-ACK is configured for PUCCH of PUCCH-SCell, while transmitting multicast HARQ-ACK on PUCCH of PCell in response to multicast PDSCH on the serving cell of the primary PUCCH group, the UE may transmit multicast HARQ-ACK on PUCCH of PUCCH-SCell in response to multicast PDSCH in serving cell of secondary PUCCH group.

If multicast HARQ-ACK is not configured for the PUCCH of the PUCCH-SCell, the UE may transmit multicast HARQ-ACK on the PUCCH of the PCell in response to the multicast PDSCH in the serving cell of the primary PUCCH group or the secondary PUCCH group.

Option 3: When multicast HARQ-ACK is configured only for PUCCH of PUCCH-SCell, the UE may transmit multicast HARQ-ACK on the PUCCH of the PUCCH-SCell in response to the multicast PDSCH in the serving cell of the primary PUCCH group or the secondary PUCCH group.

In the above-described option, the UE may be configured to ACK/NACK-based HARQ-ACK or NACK-only based HARQ-ACK for each G-RNTI. The UE may perform PUCCH transmission for each G-RNTI according to one of the above-described options.

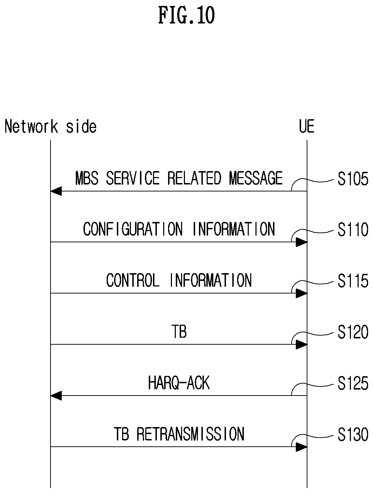

FIG. 10 is a diagram for describing a signaling procedure of a network side and a terminal according to an embodiment of the present disclosure.

FIG. 10 illustrates an embodiment of signaling between a network side and a terminal (UE) in a situation to which the above-described embodiments (e.g., Embodiment 1, Embodiment 2, Embodiment 3, Embodiment 4, or a combination of one or more of the sub-examples) of the present disclosure may be applied.

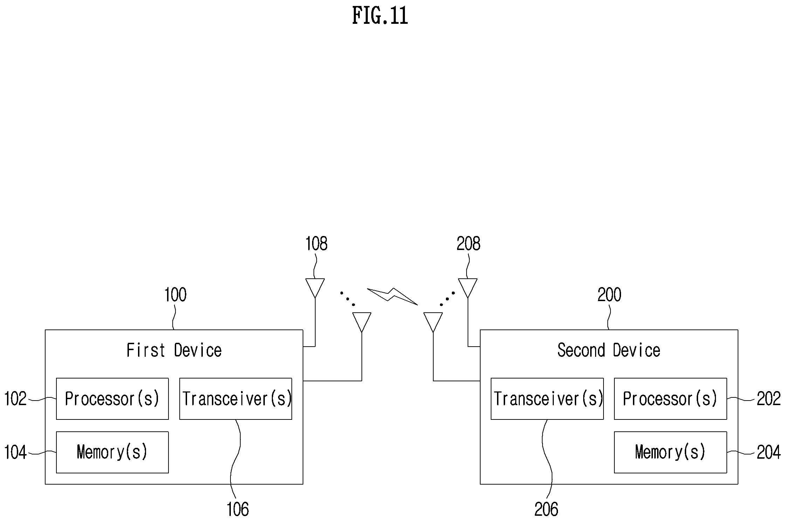

Here, the UE/network side is exemplary, and may be replaced with various devices to be described with reference to FIG. 11. FIG. 10 is for convenience of description, and does not limit the scope of the present disclosure. Also, some step(s) shown in FIG. 10 may be omitted depending on circumstances and/or settings. In addition, in the operation of the network side/UE of FIG. 10, the above-described uplink transmission/reception operation and the like may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). As an example, an ideal/non-ideal backhaul may be configured between TRP 1 and TRP 2 included in the network side. In addition, although the following description is based on a plurality of TRPs, such description may be equivalently extended and applied to transmission through a plurality of panels/cells, and may also be extended and applied to transmission through a plurality of RRHs/RRUs.

In addition, although described with reference to "TRP" in the following description, "TRP" may be replaced with and applied to a panel, an antenna array, a cell (e.g., a macro cell/small cell/pico cell, etc.), TP (transmission point), base station (base station, gNB, etc.) as described above. As described above, the TRP may be distinguished according to information (e.g., CORESET index, ID) on the CORESET group (or CORESET pool).

As an example, when one UE is configured to perform transmission and reception with a plurality of TRPs (or cells), this may mean that a plurality of CORESET groups (or CORESET pools) are configured for the one UE. The configuration of such CORESET group (or CORESET pool) may be performed through higher layer signaling (e.g., RRC signaling, etc.).

In addition, the base station may mean a generic term for an object that transmits/receives data to and from the UE. For example, the base station may be a concept including one or more TPs (Transmission Points), one or more TRPs (Transmission and Reception Points), or the like. In addition, the TP and/or TRP may include a panel, a transmission and reception unit, and the like of the base station.

The UE may enter the RRC_CONNECTED mode, and may report a message indicating one or more interested MBS services to the network side (S105).

Here, the message may be reported to the network side through at least one of Uplink Control Information (UCI), Control Element (MAC CE), and RRC messages. In addition, the MBS service of interest in the message may mean one of TMGI or G-RNTI listed in the DL message received from the network side.

For example, the DL message may be a service availability message listing TMGI #1, TMGI #3, TMGI #5, and TMGI #10. When the UE is interested in TMGI #5, the UE may indicate the order of TMGI #5 in the message. That is, the UE may report '3' to the network side.

As an additional example, the DL message may be a service availability message listing G-RNTI #1, G-RNTI #3, G-RNTI #5, and G-RNTI #10. When the UE is interested in G-RNTI #10, the UE may indicate the order of G-RNTI #10 in the message. That is, the UE may report '4' to the network side.

For example, the above-described operation of transmitting the message from the UE (100 or 200 in FIG. 11) to the network side (200 or 100 in FIG. 11) in step S105 may be implemented by the device of FIG. 11 to be described below. For example, referring to FIG. 11, one or more processors 102 may control one or more transceivers 106 and/or one or more memories 104 to transmit the message, and the one or more transceivers 106 may transmit the message to a network side.

Upon receiving the message, the network side may transmit configuration information to the terminal through an RRC message (S110).

For example, the configuration information may include CFR (common frequency resource) configuration information, one or more group common PDSCH configuration information including TCI status for one or more G-RNTI values, and search space configuration information including TCI state for one or more G-RNTI values.

Here, the RRC message may be a group common message transmitted through a PTM MCCH (Multicast Control Channel) or a UE-dedicated message transmitted through a UE-specific DCCH (Dedicated Control Channel).

And, CFR may include DL CFR and UL CFR. For example, one DL CFR may provide a group common PDCCH and a group common PDSCH transmission resource for MBS transmission and reception. One UL CFR may provide HARQ-ACK PUCCH resources for group common PDSCH reception. One CFR may be one MBS-specific BWP or one UE-specific BWP. Additionally or alternatively, one or multiple CFRs may be configured within one UE-specific BWP. One CFR may have a connection relationship with one UE-specific BWP.

The UE may be configured with at least a G-RNTI value for each MBS CFR or each serving cell. GC-CS-RNTI may be configured/used for activation, retransmission or release of one or more group common SPS configurations.

When the UE is not configured with GC-CS-RNTI for CFR or serving cell, and CS-RNTI is configured for CFR or serving cell, the UE may use CS-RNTI for activating, retransmitting, or releasing of one or more group common SPS configurations.

The network side may associate one GC-CS-RNTI value with a TMGI list or a G-RNTI list. In this case, the network side may provide a TMGI list or a G-RNTI list associated with the GC-CS-RNTI value.

Each group common SPS configuration (i.e., SPS-config) may be set as the following information element as shown in Table 6 below.

【Table 6】

```
PDSCH-Config ::= SEQUENCE {

dataScramblingIdentityPDSCH INTEGER (0..1023) OPTIONAL, -- Need S

dmrs-DownlinkForPDSCH-MappingTypeA SetupRelease { DMRS-

DownlinkConfig } OPTIONAL, -- Need M
```

```
        dmrs-DownlinkForPDSCH-MappingTypeB SetupRelease { DMRS-

DownlinkConfig } OPTIONAL, -- Need M

        tci-StatesToAddModList SEQUENCE (SIZE(1..maxNrofTCI-States)) OF

TCI-State OPTIONAL, -- Need N

        tci-StatesToReleaseList SEQUENCE (SIZE(1..maxNrofTCI-States)) OF

TCI-StateId OPTIONAL, -- Need N

        vrb-ToPRB-Interleaver ENUMERATED {n2, n4} OPTIONAL, -- Need S

        resourceAllocation ENUMERATED { resourceAllocationType0,

resourceAllocationType1, dynamicSwitch},

        pdsch-TimeDomainAllocationList SetupRelease { PDSCH-

TimeDomainResourceAllocationList } OPTIONAL, -- Need M

        pdsch-AggregationFactor ENUMERATED { n2, n4, n8 } OPTIONAL, -- Need

S

        rateMatchPatternToAddModList SEQUENCE (SIZE

(1..maxNrofRateMatchPatterns)) OF RateMatchPattern OPTIONAL, -- Need N

        rateMatchPatternToReleaseList SEQUENCE (SIZE

(1..maxNrofRateMatchPatterns)) OF RateMatchPatternId OPTIONAL, -- Need N

        rateMatchPatternGroup1 RateMatchPatternGroup OPTIONAL, -- Need R

        rateMatchPatternGroup2 RateMatchPatternGroup OPTIONAL, -- Need R

        rbg-Size ENUMERATED {config1, config2},
```

```
mcs-Table ENUMERATED {qam256, qam64LowSE} OPTIONAL, -- Need S

maxNrofCodeWordsScheduledByDCI ENUMERATED {n1, n2}

젼 }
```

For example, an operation in which the UE (100 or 200 of FIG. 11) in step S110 receives the configuration information from the network side (200 or 100 of FIG. 11) may be implemented by the device of FIG. 12 to be described below. For example, referring to FIG. 11, one or more processors 102 may control one or more transceivers 106 and/or one or more memories 104 to receive the configuration information, and one or more transceivers 106 may receive the configuration information from a network side. The UE may receive control information from the network side (S115). For example, the UE may receive downlink control information (DCI) for scheduling/activating/releasing uplink/downlink from the network side.

Specifically, if a search space is configured for a configured CFR, the UE may receive DCI scrambled with CRC as G-RNTI or G(group)-CS(configured scheduling)-RNTI by monitoring PDCCH in SS (search space) configured in configured CFR.

For example, an operation in which the UE (100 or 200 of FIG. 11) receives the control information from the network side ( 200 or 100 of FIG. 11)in step S115 described above may be implemented by the device of FIG. 11 to be described below. For example, referring to FIG. 11, one or more processors 102 may control one or more transceivers 106 and/or one or more memories 104 to receive the control information, and one or more transceivers 106 may receive the control information from a network side.

The UE may receive TB from the network side (S120).

Specifically, when the data unit is available on the MTCH of the MBS radio bearer (MRB) for the MBS service, the network side may configure a TB associated with the G-RNTI that includes data unit for SPS PDSCH case associated with MTCH of MRB for MBS service, or associated with TMGI of MBS service, or associated with short ID of MBS service or is mapped to the MBS service according to service-to-resource mapping and transmit it to the UE.

For group common dynamic scheduling of TB, the network side may transmit DCI to the UE through the PDCCH. The corresponding DCI may be CRC scrambled by G-RNTI, G-CS-RNTI, or CS-RNTI. The PDCCH may be implemented as a group common PDCCH or a UE-specific PDCCH.

For example, the DCI may include at least one of an identifier for DCI format, carrier indicator, bandwidth part indicator, frequency domain resource assignment, time domain resource assignment, VRB-to-PRB mapping, PRB bundling size indicator, rate matching indicator, ZP CSI-RS trigger, MCS, NDI, RV, HARQ process number, downlink allocation index, TPC command for scheduled PUCCH, a PUCCH resource indicator, a PDSCH-to-HARQ_feedback timing indicator, an antenna port, a transmission configuration indicator, an SRS request, a DMRS sequence initialization, and a priority indicator.

For group common dynamic scheduling, by group common or UE specific RRC message or by group common or terminal specific MAC CE, the network side may provide the UE with one or more service-resource mappings for MBS services identified by TMGI or G-RNTI or GC-CS-RNTI. The data of the MBS service may be carried over the multicast traffic logical channel, that is, the MBS radio bearer (MRB) of the MTCH associated with the MBS service. The RRC message may be a group common message transmitted through a PTM Multicast Control Channel (MCCH) or a UE-specific message transmitted through a UE-specific Dedicated Control Channel (DCCH). The DCI scheduling PDSCH carrying MBS service data may also indicate one or more of a short ID, MTCH ID, MRB ID, G-RNTI value and TMGI value for MBS service.

When the UE receives the DCI scrambled by the CRC by the G-RNTI, the UE may determine MBS service(s) associated with one or more of the short ID, MTCH ID, MRB ID, G-RNTI value, and TMGI value for each PDSCH occasion based on the mapping between the MBS service indicated in the DCI and the HPN and/or the mapping between the MBS service indicated in the DCI and the short ID(s).

Then, if the UE is interested in the determined MBS service(s), the UE may receive PDSCH transmission scheduled by DCI. If the UE is not interested in the determined MBS service(s), the UE may not receive PDSCH transmission scheduled by DCI.

For example, an operation in which the UE (100 or 200 of FIG. 11) in step S120 receives the TB from the network side (200 or 100 of FIG. 11) may be implemented by the device of FIG. 11 to be described below. For example, referring to FIG. 11, one or more processors 102 may control one or more transceivers 106 and/or one or more memories 104, etc. to receive the TB, and one or more transceivers 106 may receive the TB from the network side.

Upon receiving the group common DCI indicating the PUCCH resource for the MBS HARQ-ACK, the UE may transmit the HARQ-ACK through the PUCCH after receiving the PDSCH scheduled by the DCI (S125). That is, according to the decoding state of the PDSCH transmission, the UE may transmit HARQ feedback to the network side.

In the case of PTM scheme 1, the group common DCI may indicate a single PUCCH resource indicator and a single PDSCH-to-HARQ_feedback timing indicator for at least ACK/NACK-based HARQ-ACK.

Specifically, in the case of UE-specific PUCCH resource allocation for HARQ-ACK based on ACK/NACK for group common DCI, other UEs of the corresponding group may be configured to at least different values of 'PUCCH-Resource' and 'dl-DataToUL-ACK' in UE-dedicated 'PUCCH-config' for multicast or unicast (unless 'PUCCH-config' for multicast is configured). Different PUCCH resources may be allocated to different UEs by the same PUCCH resource indicator and the same PDSCH-to-HARQ_feedback timing indicator of the group common DCI.

For PTP retransmission, in the UE-specific DCI, the PUCCH resource indicator and the PDSCH-to-HARQ_feedback timing indicator can be interpreted based on 'PUCCH-config' for unicast regardless of whether 'PUCCH-config' for multicast is configured.

Here, the PUCCH Resource Indicator (PRI) may be indicated by a group common DCI as will be described later.

For example, a UE-specific PRI list may be included in DCI (option 1A-1). Each PRI in the list may indicate an entry corresponding to a candidate 'pucch-ResourceId' value of 'PUCCH-config' for allocation of the same PUCCH resource or different PUCCH resources to different terminals of a group that has received the same DCI. Different PRIs of DCI may indicate different entries of 'PUCCH-config'.

Here, the candidate 'pucch-ResourceId' value may be configured by RRC, and at least in multicast 'PUCCH-config', different 'pucch-ResourceId' values may be configured for other UEs of the same group.

As another example, a group common PRI may be included in the DCI (option 1A-2). A single group common PRI may indicate a specific entry for a candidate 'pucch-ResourceId' value in UE-specific 'PUCCH-config' for the same or different PUCCH resource allocation for all UEs in the group.

And, the candidate 'pucch-ResourceId' value may be configured by RRC. At least in 'PUCCH-config' for multicast, different 'pucch-ResourceId' values may be configured for different UEs of the same group.

When 'PUCCH-config' for multicast is configured to HARQ-ACK to group a common PDSCH scheduled by a group common DCI, the UE may assume that the PRI of the group common DCI indicates an entry corresponding to the candidate 'pucch-ResourceId' value of 'PUCCH-config' for multicast.

If 'PUCCH-config' for multicast is not configured for HARQ-ACK for group common PDSCH scheduled by group common DCI, the UE may assume that the PRI of the group common DCI indicates a corresponding entry for the candidate 'pucch-ResourceId' value of 'PUCCH-config' for unicast.

K1 (PDSCH-to-HARQ_feedback timing indicator) may be indicated by a group common DCI as will be described later.

For example, a list of UE-specific K1 values may be included in DCI (option 1B-1). Each K1 in the list may indicate the same UL slot or a different UL (sub)slot for other UEs in the group.

For example, different K1 values are assigned to different terminals. That is, a value K1 may be assigned to device 1, a value K2 may be assigned to device 2, and a value K3 may be assigned to device 3.

As another example, a value of K1 may be shared by several terminals. For example, device 1 and device 2 may share a value of K1, and device 3 and device 4 may share a value of K2.

As another example, one K1 value may be a reference, and another K1 value may be assigned based on the reference. {K1_ref, list of K1_offset} may be indicated in DCI.

For example, device 1 may use K1_ref, device 2 may use K1_ref + K1_offest1, and device 3 may use K1_ref + K1_offest2.

As another example, a group common K1 value may be included in DCI (option 1B-2). For example, a single K1 value may indicate a corresponding entry for a candidate 'dl-DataToUL-ACK' value in the UE-specific 'PUCCH-config' for the same or different PUCCH resource allocation for all UEs in a group receiving DCI. This may be applied when the DCI format is configured in the UE-specific 'PUCCH-config' for the K1 value.

As another example, the candidate 'dl-DataToUL-ACK' value is set by RRC, and may be configured differently for different terminals of the same group, at least in 'PUCCH-config' for multicast.

As another example, when 'PUCCH-config' for multicast is configured for HARQ-ACK for grouping a common PDSCH scheduled by group common DCI, the UE may assume that the K1 value of the group common DCI indicates a corresponding entry for the candidate 'dl-DataToUL-ACK' value in 'PUCCH-config' for multicast.

As another example, when 'PUCCH-config' for multicast is not configured for HARQ-ACK for grouping a common PDSCH scheduled by a group common DCI, the UE may assume that the K1 value of the group common DCI indicates an entry corresponding to the candidate 'dl-DataToUL-ACK' value in 'PUCCH-config' for unicast.

In addition, when receiving a group common DCI scrambled by the G-RNTI and/or a UE-specific DCI scrambled by the CRC-RNTI, if the Type-1 HARQ-ACK codebook is configured for 'PUCCH-config' for multicast and/or 'PUCCH-config' for unicast, the UE may configure the TDRA (Time Domain Resource Allocation) to generate a type-1 HARQ-ACK codebook for HARQ-ACK(s) to group the common PDSCH scheduled by the group common DCI and/or the UE specific PDSCH scheduled by the UE specific DCI.

If TB decoding is not successful in a PDSCH transmission occasion, the UE may transmit HARQ NACK to the base station through PUCCH resources in the configured UL CFR.

By using PUCCH resources, the UE may transmit HARQ-ACK on other PDSCH transmissions such as unicast SPS PDSCH, dynamic unicast PDSCH, PTP retransmission and/or dynamic group common PDSCH.

Here, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may configure a codebook based on one or more of the above options.

If an RSRP threshold is configured, the UE may use NACK-only based HARQ-ACK based NACK based on the RSRP of the measured serving cell. If the measured RSRP is higher than the threshold value, NACK-only based HARQ-ACK may be transmitted through the group common PUCCH resource indicated by the PRI of DCI. If the measured RSRP is lower than the threshold, NACK-only based HARQ-ACK may be changed to ACK/NACK based HARQ-ACK on UE-specific PUCCH resources indicated by PRI of DCI.

On the other hand, if 'pdsch-AggregationFactor' is configured for G-RNTI or 'repeat_number' is indicated by DCI from the network side, the TB scheduled by the group common DCI, if configured, may be repeated for the Nth HARQ transmission of the TB within each symbol allocation between each 'pdsch-AggregationFactor' contiguous slot or each 'repeat_number' contiguous slot.

For example, the operation of the UE (100 or 200 in FIG. 11) transmitting the HARQ-ACK from the network side (200 or 100 in FIG. 11) in step S125 described above may be implemented by the device of FIG. 11 to be described below. For example, referring to FIG. 11, one or more processors 102 may control one or more transceivers 106 and/or one or more memories 104 to transmit the HARQ-ACK, and the one or more transceivers 106 may transmit the HARQ-ACK from the network side.

Upon receiving the HARQ NACK in the TCI state, the network side may retransmit the PDCCH and the PDSCH using the TCI state in the DL CFR configured for TB retransmission (S130).

The UE may monitor the group common and/or UE specific PDCCH using the TCI state for the search space configured in the DL CFR to receive the TB retransmission. The network side may retransmit the TB to one of the UEs in the group by means of a terminal-specific PDCCH. However, since the other UE successfully received the TB, it may not receive the retransmission of the TB.

When the UE receives the PDCCH for retransmission of TB, the UE may receive the PDSCH scheduled by the DCI of the PDCCH. If the UE successfully decodes TB in PDSCH, the UE may consider that the decoded TB is associated with the short ID of the MTCH, MRB, TMGI, G-RNTI, and/or MBS service based on mapping between MBS service indicated by DCI and HARQ process number (HPN), and/or mapping between MBS service indicated by DCI and short ID (s).

If TB decoding succeeds at the PDSCH transmission occasion, the UE may transmit HARQ ACK to the network side through PUCCH resources in the UL CFR configured according to the above-described procedure. Using the PUCCH resource, the UE may transmit HARQ-ACK on other PDSCH transmissions such as unicast SPS PDSCH, dynamic unicast PDSCH, PTP retransmission and/or dynamic group common PDSCH.

In this case, in order to multiplex HARQ-ACK on PUCCH in (sub)slot for SPS PDSCH for multicast, SPS PDSCH for unicast, dynamically scheduled multicast PDSCH and/or dynamically scheduled unicast PDSCH, the UE may configure a codebook based on one or more of the above-described options/embodiments.

For example, an operation in which the UE (100 or 200 of FIG. 11) receives the TB retransmission from the network side (200 or 100 of FIG. 11) in step S130 described above may be implemented by the device of FIG. 11 to be described below. For example, referring to FIG. 11, one or more processors 102 may control one or more transceivers 106 and/or one or more memories 104 to receive the TB retransmission, and one or more transceivers 106 may receive the TB retransmission from the network side.

General Device to which the Present Disclosure may be applied

FIG. 11 illustrates a block diagram of a wireless communication device according to an embodiment of the present disclosure.

In reference to FIG. 11, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to perform uplink transmission in a wireless communication system, the method comprising:

   receiving first information related to a plurality of semi-persistent scheduling (SPS) configurations from a base station;
   receiving a first type of downlink control information (DCI) or a second type of DCI from the base station; and
   releasing at least one SPS configuration among the plurality of SPS configurations based on the first type of DCI or the second type of DCI,
   wherein an index of the at least one SPS configuration is mapped to a specific deactivation state value of a SPS configuration,
   wherein, based on the first type of DCI indicating the specific deactivation state value being received from the base station through a hybrid automatic repeat request (HARQ)-acknowledgement (ACK) process number field, the at least one SPS configuration is released, and
   wherein, based on the second type of DCI including the HARQ-ACK process number field being received from the base station, a specific SPS configuration having same index as a value of the HARQ-ACK process number field is released.

2. The method of claim 1, wherein:

   the first type of DCI is a unicast DCI format, and
   the second type of DCI is a multicast DCI format.

3. The method of claim 1, wherein:

   the first type of DCI is cyclic redundancy check (CRC) scrambled by a configured scheduling (CS)-radio network temporary identifier (RNTI), and
   the second type of DCI is CRC scrambled by G(group)-CS-RNTI.

4. The method of claim 1, wherein:

   the at least one SPS configuration includes a unicast SPS configuration, and
   an index of the specific SPS configuration is mapped to a multicast SPS configuration.

5. The method of claim 1, wherein:
   second information related to an SPS configuration deactivation state list including the specific deactivation state value of the SPS configuration is received from the base station.

6. The method of claim 5, wherein:
   the SPS configuration deactivation state list includes a deactivation state value of at least one SPS configuration for multicast and a deactivation state value of at least one SPS configuration for unicast.

7. The method of claim 1, wherein:
   each of the plurality of SPS configurations is mapped to a different SPS configuration index value.

8. The method of claim 1, wherein:
third information for configuring the first type of DCI to either the unicast DCI format or the multicast DCI format and configuring the second type of DCI to another one of the unicast DCI format or the multicast DCI format is received from the base station.

9. A user equipment (UE) performing uplink transmission in a wireless communication system, the UE comprising:

at least one transceiver; and
at least one processor coupled to the at least one transceiver,
wherein the at least one processor is configured to:

receive, through the at least one transceiver, first information related to a plurality of semi-persistent scheduling (SPS) configurations from a base station;
receive, through the at least one transceiver, a first type of downlink control information (DCI) or a second type of DCI from the base station; and
release at least one SPS configuration among the plurality of SPS configurations based on the first type of DCI or the second type of DCI,

wherein an index of the at least one SPS configuration is mapped to a specific deactivation state value of a SPS configuration,
wherein, based on the first type of DCI indicating the specific deactivation state value being received from the base station through a hybrid automatic repeat request (HARQ)-acknowledgement (ACK) process number field, the at least one SPS configuration is released, and
wherein, based on the second type of DCI including the HARQ-ACK process number field being received from the base station, a specific SPS configuration having same index as a value of the HARQ-ACK process number field is released.

10. A method for performing uplink reception by a base station in a wireless communication system, the method comprising:

transmitting first information related to a plurality of semi-persistent scheduling (SPS) configurations to a user equipment (UE); and
transmitting a first type of downlink control information (DCI) or a second type of DCI to the UE,
wherein an index of the at least one SPS configuration is mapped to a specific deactivation state value of a SPS configuration,
wherein, based on the first type of the DCI or the second type of DCI, at least one SPS configuration of the plurality of SPS configurations is released,
wherein, based on the first type of DCI indicating a specific deactivation state value being transmitted to the UE through a hybrid automatic repeat request (HARQ)-acknowledgement (ACK) process number field, the at least one SPS configuration is released, and
wherein, based on the second type of DCI including the HARQ-ACK process number field being transmitted to the UE, a specific SPS configuration having same index as a value of the HARQ-ACK process number field is released.

11. A base station performing uplink reception in a wireless communication system, the base station comprising:

at least one transceiver; and
at least one processor coupled to the at least one transceiver,
wherein the at least one processor is configured to:

transmit, through the at least one transceiver, first information related to a plurality of semi-persistent scheduling (SPS) configurations to a user equipment (UE); and
transmit, through the at least one transceiver, a first type of downlink control information (DCI) or a second type of DCI to the UE,
wherein an index of the at least one SPS configuration is mapped to a specific deactivation state value of a SPS configuration,
wherein, based on the first type of the DCI or the second type of DCI, at least one SPS configuration of the plurality of SPS configurations is released,

wherein, based on the first type of DCI indicating a specific deactivation state value being transmitted to the UE through a hybrid automatic repeat request (HARQ)-acknowledgement (ACK) process number field, the at least one SPS configuration is released, and

wherein, based on the second type of DCI including the HARQ-ACK process number field being transmitted to the UE, a specific SPS configuration having same index as a value of the HARQ-ACK process number field is released.

12. A processing device configured to control a user equipment (UE) to perform uplink transmission in a wireless communication system, the processing device comprising:

at least one processor; and
at least one computer memory operatively coupled to the at least one processor and storing instructions for performing operations upon being executed by the at least one processor,
wherein the operations comprise:

receiving first information related to a plurality of semi-persistent scheduling (SPS) configurations from a base station;
receiving a first type of downlink control information (DCI) or a second type of DCI from the base station; and
releasing at least one SPS configuration among the plurality of SPS configurations based on the first type of DCI or the second type of DCI,

wherein an index of the at least one SPS configuration is mapped to a specific deactivation state value of a SPS configuration,
wherein, based on the first type of DCI indicating the specific deactivation state value being received from the base station through a hybrid automatic repeat request (HARQ)-acknowledgement (ACK) process number field, the at least one SPS configuration is released, and
wherein, based on the second type of DCI including the HARQ-ACK process number field being received from the base station, a specific SPS configuration having same index as a value of the HARQ-ACK process number field is released.

13. At least one non-transitory computer readable medium storing at least one instruction, wherein:

the at least one instruction executed by at least one processor controls a device which performs uplink transmission in a wireless communication system to perform:

receiving first information related to a plurality of semi-persistent scheduling (SPS) configurations from a base station;
receiving a first type of downlink control information (DCI) or a second type of DCI from the base station; and
releasing at least one SPS configuration among the plurality of SPS configurations based on the first type of DCI or the second type of DCI,

wherein an index of the at least one SPS configuration is mapped to a specific deactivation state value of a SPS configuration,
wherein, based on the first type of DCI indicating the specific deactivation state value being received from the base station through a hybrid automatic repeat request (HARQ)-acknowledgement (ACK) process number field, the at least one SPS configuration is released, and
wherein, based on the second type of DCI including the HARQ-ACK process number field being received from the base station, a specific SPS configuration having same index as a value of the HARQ-ACK process number field is released.

FIG.1

NGC

AMF/UPF          AMF/UPF

NG-C/U          NG-C/U

NG-C/U          NG-C/U

gNB          Xn          gNB          NG-RAN

Xn          Xn

gNB

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$       $l = 14 \cdot 2^{\mu} - 1$

# FIG.4

FIG.5

Resource grid

A carrier
(up to 3300 subcarriers, i.e., 275 RBs)

A BWP

1 RB=12 subcarrier

1 RE

1 subcarrier

1 Symbol

k=0

l=0  · · · · ·

## FIG.6

INITIAL CELL SEARCH | SYSTEM INFORMATION RECEPTION | RANDOM ACCESS PROCEDURE | GENERAL DL/UL Tx/Rx

PSS/SSS& [DLRS]& PBCH

PDCCH/ PDSCH (BCCH)

PRACH | PDCCH/ PDSCH | PUSCH | PDCCH/ PDSCH

PDCCH/ PDSCH | PUSCH/ PUCCH

S601  S602  S603  S604  S605  S606  S607  S608

· DL/UL ACK/NACK
· UE CQI/PMI RI REPORT
  USING PUSCH AND PUCCH

# FIG.7

```
RECEIVING FIRST INFORMATION
RELATED TO A PLURALITY OF SPS         ~ S710
CONFIGURATIONS FROM THE BASE
STATION
```

```
RECEIVING THE FIRST TYPE OF DCI OR
THE SECOND TYPE OF DCI FROM THE       ~ S720
BASE STATION
```

```
RELEASING AT LEAST ONE SPS
CONFIGURATION AMONG A PLURALITY
OF SPS CONFIGURATIONS BASED ON        ~ S730
THE FIRST TYPE OF DCI OR THE
SECOND TYPE OF THE DCI
```

# FIG.8

```
TRANSMITTING FIRST INFORMATION
RELATED TO A PLURALITY OF SPS         ~ S810
CONFIGURATIONS TO THE UE
```

```
TRANSMITTING THE FIRST TYPE OF DCI
OR THE SECOND TYPE OF DCI TO THE      ~ S820
UE
```

FIG.9

FIG.10

Network side                                                    UE

MBS SERVICE RELATED MESSAGE ———————— S105

CONFIGURATION INFORMATION ———————— S110

CONTROL INFORMATION ———————— S115

TB ———————— S120

HARQ-ACK ———————— S125

TB RETRANSMISSION ———————— S130

# FIG.11

## INTERNATIONAL SEARCH REPORT

| International application No. |
| --- |
| **PCT/KR2023/000413** |

### A. CLASSIFICATION OF SUBJECT MATTER

**H04W 72/232**(2023.01)i; **H04W 72/11**(2023.01)i; **H04L 1/18**(2006.01)i

According to International Patent Classification (IPC) or to both national classification and IPC

### B. FIELDS SEARCHED

Minimum documentation searched (classification system followed by classification symbols)

H04W 72/232(2023.01); H04L 12/24(2006.01); H04L 5/00(2006.01); H04W 24/08(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: multiple SPS, unicast DCI, multicast DCI, release, deactivate state, HARQ-ACK process number, same index

### C. DOCUMENTS CONSIDERED TO BE RELEVANT

| Category* | Citation of document, with indication, where appropriate, of the relevant passages | Relevant to claim No. |
| --- | --- | --- |
| Y | US 2021-0243087 A1 (PANPSY TECHNOLOGIES, LLC) 05 August 2021 (2021-08-05)<br>See paragraph [0246]; and claims 1-6. | 1-13 |
| Y | QUALCOMM INCORPORATED. View on group scheduling for Multicast RRC_CONNECTED UEs. R1-2112239, 3GPP TSG RAN WG1 #107-e, e-Meeting. 06 November 2021.<br>See sections 2.7-2.8. | 1-13 |
| A | LG ELECTRONICS INC. Support of group scheduling for RRC_CONNECTED UEs. R1-2112063, 3GPP TSG RAN WG1 Meeting #107-e. [Online]. 06 November 2021.<br>See pages 1-8. | 1-13 |
| A | SAMSUNG. Group scheduling for RRC_CONNECTED UEs. R1-2109515, 3GPP TSG RAN WG1 #106bis-e, e-Meeting. 01 October 2021.<br>See sections 2-3. | 1-13 |
| A | US 2021-0100001 A1 (TELEFONAKTIEBOLAGET LM ERICSSON (PUBL)) 01 April 2021 (2021-04-01)<br>See paragraphs [0031]-[0036]; and claim 26. | 1-13 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 April 2023** | **18 April 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/000413**

| Patent document cited in search report | | | Publication date (day/month/year) | Patent family member(s) | | | Publication date (day/month/year) |
|---|---|---|---|---|---|---|---|
| US | 2021-0243087 | A1 | 05 August 2021 | US | 11018946 | B1 | 25 May 2021 |
| | | | | US | 11108639 | B2 | 31 August 2021 |
| | | | | US | 2021-0135946 | A1 | 06 May 2021 |
| | | | | US | 2021-0351986 | A1 | 11 November 2021 |
| | | | | US | 2022-0385537 | A1 | 01 December 2022 |
| US | 2021-0100001 | A1 | 01 April 2021 | EP | 3685617 | A1 | 29 July 2020 |
| | | | | WO | 2019-053291 | A1 | 21 March 2019 |

Form PCT/ISA/210 (patent family annex) (July 2022)